# EUROPÄISCHE PATENTSCHRIFT

(11) **EP 2 430 295 B1**
(45) Veröffentlichungstag und Bekanntmachung des Hinweises auf die Patenterteilung: **19.12.2012**
(21) Anmeldenummer: 10714011.3
(22) Anmeldetag: 21.04.2010
(51) Int. Cl.: F02D 41/14, F02D 41/22, F01N 11/00

(54) **VERFAHREN UND VORRICHTUNG ZUR ÜBERWACHUNG EINES IN EINEM ABGASBEREICH EINER BRENNKRAFTMASCHINE ANGEORDNETEN BAUTEILS**
METHOD AND DEVICE FOR MONITORING A COMPONENT INSTALLED IN THE EXHAUST SYSTEM OF AN INTERNAL COMBUSTION ENGINE
PROCÉDÉ ET DISPOSITIF DE SURVEILLANCE D'UN COMPOSANT INSTALLÉ DANS LE SYSTÈME D'ÉCHAPPEMENT D'UN MOTEUR À COMBUSTION INTERNE

(30) Priorität: 14.05.2009 DE 102009003091
(43) Veröffentlichungstag der Anmeldung: 21.03.2012
(73) Patentinhaber: Robert Bosch GmbH, 70442 Stuttgart (DE)
(72) Erfinder: GENSSLE, Andreas, 70771 Musberg (DE); BAARS, Enno, 71229 Leonberg (DE); EITEL, Markus, 72072 Tuebingen (DE)
(86) Internationale Anmeldenummer: PCT/EP2010/055268
(87) Internationale Veröffentlichungsnummer: WO 2010/130539

(56) Entgegenhaltungen:
- WO-A1-01/35065
- WO-A1-2004/003355
- WO-A1-2006/110071
- DE-A1- 10 331 334
- DE-A1- 10 358 195

## Beschreibung

### Stand der Technik

Die Erfindung betrifft ein Verfahren zur Überwachung einer in einem Abgasbereich einer Brennkraftmaschine angeordneten Sensoreinheit.

Die Erfindung betrifft weiterhin eine entsprechende Vorrichtung zur Durchführung des Verfahrens.

Zur Einhaltung der gesetzlichen Grenzwerte für Emissionen von Brennkraftmaschinen werden verschiedene Komponenten zur Abgasnachbehandlung sowie Sensoreinheiten zur Regelung dieser Systeme und zur Überwachung der Emissionen eingesetzt. Als Komponenten zur Abgasnachbehandlung sind beispielsweise Oxidations-Katalysatoren, Diesel-Partikelfilter (DPF), SCR-Katalysatoren sowie NOₓ-Katalysatoren bekannt. Entsprechende Sensorsysteme sind beispielsweise Lambdasonden, NOₓ-Sensoren oder Partikelsensoren.

Aufgrund derzeit geplanter gesetzlicher Vorschriften muss beispielsweise der Partikelausstoß einer Brennkraftmaschine, insbesondere eines Dieselmotors, vor und / oder nach dem Diesel-Partikelfilter (DPF), während des Fahrbetriebs überwacht werden. Weiterhin ist eine Beladungsprognose des Diesel-Partikelfilters zur Regenerationskontrolle erforderlich, um eine hohe Systemsicherheit zu erreichen und kostengünstige Filtermaterialien einsetzen zu können. Weiterhin kann eine Regelung der Verbrennungseigenschaften der Brennkraftmaschine auf Basis der Information über den Partikelausstoß vorgesehen sein.

Im Rahmen neuer Gesetzgebungen ist weiterhin die Überwachung dieser Komponenten und Sensoreinheiten gegen Fehlfunktion und missbräuchlichen Ausbau sicherzustellen. Dies ist im Rahmen einer so genannten On-Board-Diagnose (OBD) sicher zu gewährleisten.

Aus der DE 103 58 195 A1 ist beispielsweise ein Verfahren zur Überwachung eines in einem Abgasbereich einer Brennkraftmaschine angeordnetem Bauteils, bei dem ein Maß für eine erste Abgastemperatur vor dem Bauteil ermittelt wird, und bei dem eine zweite Abgastemperatur von einem zweiten Temperatursensor gemessen wird, die nach dem Bauteil auftritt. Dabei ist vorgesehen, dass das Tiefpassverhalten, welches durch die Wärmekapazität des Bauteils bestimmt ist, überprüft wird durch eine Bewertung der ersten Abgastemperatur in Bezug auf die zweite Abgastemperatur und dass bei einer Änderung eines vorgegebenen Maßes für das Tiefpassverhalten des Bauteils ein Fehlsignal ausgegeben wird.

Mit diesem Verfahren kann der Zustand des Bauteils, welches sich in Strömungsrichtung des Abgases zwischen den beiden Temperatursensoren befindet, beurteilt werden. So lassen sich beispielsweise auch unzulässige Manipulationen an diesem Bauteil bis hin zur vollständigen Entfernung des Bauteils detektieren.

Allerdings kann damit nicht erkannt werden, ob die Sensoreinheit, beispielsweise der Partikelsensor, selbst manipuliert oder gar unzulässigerweise entfernt wird.

Ein anderes Verfahren is ebenfalls aus der DE 103 31 334 A1 bekannt.

Es ist daher Aufgabe der Erfindung, ein Verfahren bereit zustellen, mit dem ein missbräuchlicher Ausbau der Sensoreinheit im Abgasstrang von Brennkraftmaschinen überwacht und sicher angezeigt wird.

Es ist weiterhin Aufgabe der Erfindung, eine zur Durchführung des Verfahrens entsprechende Vorrichtung bereitzustellen.

### Offenbarung der Erfindung

Die das Verfahren betreffende Aufgabe wird durch die Merkmale der Ansprüche 1 bis 7 gelöst.

Dabei ist vorgesehen, dass mit der Sensoreinheit eine Sensortemperatur direkt oder indirekt bestimmt und aus einem Vergleich der direkt oder indirekt bestimmten Sensortemperatur mit einer mittels einer weiteren Sensoreinheit bestimmten Abgastemperatur und/ oder mit Modellgrößen und/ oder mit definierten Schwellwerten eine Erkennung auf Ausbau und/ oder nicht funktionsgerechten Einbau der Sensoreinheit geschlossen wird.

Die die Vorrichtung betreffende Aufgabe wird dadurch gelöst, dass mit der Sensoreinheit eine Sensortemperatur direkt oder indirekt bestimmbar ist, welche in einer Motorsteuerung mit einer mittels einer weiteren Sensoreinheit bestimmten Abgastemperatur und/ oder mit Modellgrößen und/ oder mit definierten Schwellwerten vergleichbar ist und aus dem Vergleich ein Fehlereintrag und/ oder eine Warnmeldung ableitbar ist.

Mit dem vorgestellten Verfahren und der Vorrichtung zur Durchführung dieses Verfahrens können bauliche Veränderungen oder Schäden im Bereich des Abgasbereichs der Brennkraftmaschine detektiert werden. Gegenüber dem oben zitierten Stand der Technik lassen sich damit im Rahmen einer erweiterten On-Board-Diagnose (OBD) Fehlfunktionen oder gar ein missbräuchlicher Ausbau der Sensoreinheit sicher detektieren. Zudem können auch bauliche Veränderungen oder Defekte der Abgasanlage stromaufwärts der Sensoreinheit erkannt werden. So können beispielsweise ein Ausbau von einzelnen Komponenten einer Abgasnachbehandlungsanlage oder Löcher im Abgasstrang erkannt werden, da sich dann das Wärmespeicherverhalten der Anlage bzw. das Anströmverhalten der Sensoreinheit ändert, welche beispielsweise gegenüber modellhaft ermittelten Werten des Temperaturverlaufs einen geänderten Temperaturverlauf ergeben, welcher als Abweichung detektiert und angezeigt werden kann.

Eine erfindungsgemäße Verfahrensvariante sieht vor, dass die absolute Sensortemperatur der Sensoreinheit mit der Abgastemperatur kontinuierlich verglichen wird. Ergeben sich dabei beispielsweise größere Abweichungen, können diese mittels entsprechender Komparatoren detektiert werden. Ebenso sind entsprechende Vergleiche mit in einem Kennfeld gespeicherten Modellwerten möglich. Die Abgastemperatur kann dabei aus bereits zur Verfügung stehenden Messwerten oder aus Modellwerten innerhalb einer Motorsteuereinheit abgeleitet werden.

Es kann aber auch vorteilhaft sein, wenn aus dem absoluten Temperaturverlauf der Sensoreinheit abgeleitete Größen mit entsprechend abgeleiteten Größen der Abgastemperatur kontinuierlich verglichen werden. So lassen sich beispielsweise gleitende Mittelwerte oder zeitliche Ableitungen der Temperaturverläufe untereinander bzw. der Sensor-Temperaturverlauf mit gespeicherten Werten vergleichen. Neben der Diagnose können mit derartigen mathematischen Operationen beispielsweise kurzzeitig auftretende Störungen im Signalverlauf eliminiert werden, wenn beispielsweise ein gleitender Durchschnittswert ermittelt wird. Damit können Fehlalarme vermieden werden.

Ein weiteres Verfahrensbeispiel betrifft einen Vergleich eines Gradienten des Temperaturverlaufs der Sensoreinheit mit einem Gradienten des Verlaufs der Abgastemperatur. Dies bietet insbesondere Vorteile, wenn die Dynamik der Signalverläufe ausgewertet werden.

Eine weitere Methode sieht vor, dass der dynamische Temperaturverlauf der Sensoreinheit bei Beheizung der Sensoreinheit gegenüber einer Modellgröße für die Sensoreinheit bei Beheizung ausgewertet wird. Hier macht man sich zu Nutze, dass bei einer missbräuchlich ausgebauten oder fehlerhaft eingebauten Sensoreinheit ein von einer ordnungsgemäß eingebauten Sensoreinheit deutlich anderer Temperaturverlauf verzeichnet wird.

Dabei kann beispielsweise vorgesehen sein, dass eine benötigte Heizleistung zur Einregelung einer Solltemperatur unter Berücksichtigung eines Abgasmassenstroms und der Abgastemperatur ausgewertet wird. Wird beispielsweise eine zu kleine Heizleistung bestimmt, kann dies auf einen Ausbau der Sensoreinheit hindeuten.

In weiteren Verfahrensvarianten ist vorgesehen, dass die Auswertung periodisch in bestimmten Zeitabständen, beispielsweise während einer Regeneration des Dieselpartikelfilters (DPF) bei einer Diesel-Brennkraftmaschine, und/ oder bei bestimmten Betriebszuständen der Brennkraftmaschine, beispielsweise während des Schubbetriebs der Brennkraftmaschine, durchgeführt wird. Dies ist vorteilhaft, da hier bekannte bzw. relativ konstante Betriebsbedingungen vorherrschen und äußere Störgrößen leicht erkannt oder nur geringfügig vorhanden sind.

Eine besonders genaue Temperaturmesseinrichtung kann realisiert werden, wenn die Sensoreinheit einen Temperatursensor in Form eines Platinmäanders aufweist, da diese Art von Temperatursensoren eine nahezu lineare Widerstands-Temperatur-Kennlinie aufweist, die mit einem einfachen elektronischen Schaltungsaufwand auswertbar ist. In anderen Ausführungsbeispielen können auch andere Metall-Legierungen als Temperaturfühler eingesetzt werden, die eine andere Widerstandscharakteristik aufweisen.

In einer weiteren bevorzugten Ausführungsform kann die Sensoreinheit ein Heizelement aufweisen. Dabei kann die Temperatur der Sensoreinheit beispielsweise indirekt aus der benötigten Heizleistung unter Berücksichtigung des Abgasmassenstroms und der Abgastemperatur bestimmt werden.

In einer besonders bevorzugten Ausführungsform ist die Sensoreinheit als Partikelsensor ausgeführt. Dieser kann bereits einen Temperatursensor und/ oder ein Heizelement zur direkten oder zur indirekten Temperaturbestimmung enthalten. Partikelsensoren stellen inzwischen wichtige Überwachungssensoren im Abgassystem einer Diesel-Brennkraftmaschine dar.

Eine bevorzugte Anwendung der Verfahrensvarianten, wie sie zuvor beschrieben wurde, sieht daher die On-Board-Diagnose bei einer Diesel-Brennkraftmaschine vor. In dieser Anwendung kommt es insbesondere darauf an, das der Partikelsensor ordnungsgemäß eingebaut ist bzw. nicht unzulässigerweise ausgebaut ist. Dies kann sicher mit dem vorgestellten Diagnoseverfahren detektiert werden. Damit ist sichergestellt, dass eine genaue und reproduzierbare Diagnose der Partikelemission eines im Abgasstrang der Diesel-Brennkraftmaschine angeordneten Russpartikelfilters (DPF) detektiert und im Rahmen der On-Board-Diagnose überwacht wird.

Die Funktionalität des Verfahrens kann dabei als Software- und/ oder Hardwarebasierte Lösung in einer Motorsteuerung integriert sein. Bei Dieselmotoren kann dies insbesondere in einer elektronischen Dieselregelung EDC (Electronic Diesel Control) integriert sein.

Das erfindungsgemäße Verfahren kann auch bei Lambdasonden oder NOₓ-Sensoren als Sensoreinheiten angewendet werden.

Die Erfindung wird im Folgenden anhand eines in den Figuren dargestellten Ausführungsbeispiels näher erläutert. Es zeigen:
Figur 1 in einer schematischen Darstellung das technische Umfeld, in der das Verfahren angewendet werden kann,
Figur 2 schematisch eine als Partikelsensor ausgeführten Sensoreinheit in der Draufsicht,
Figur 3 in einer schematischen Darstellung einen Partikelsensor in einer Seitenansicht,
Figur 4 ein Verlaufsdiagramm für einen Abgasmassenstrom, eine Abgastemperatur und eine Partikelsensortemperatur.

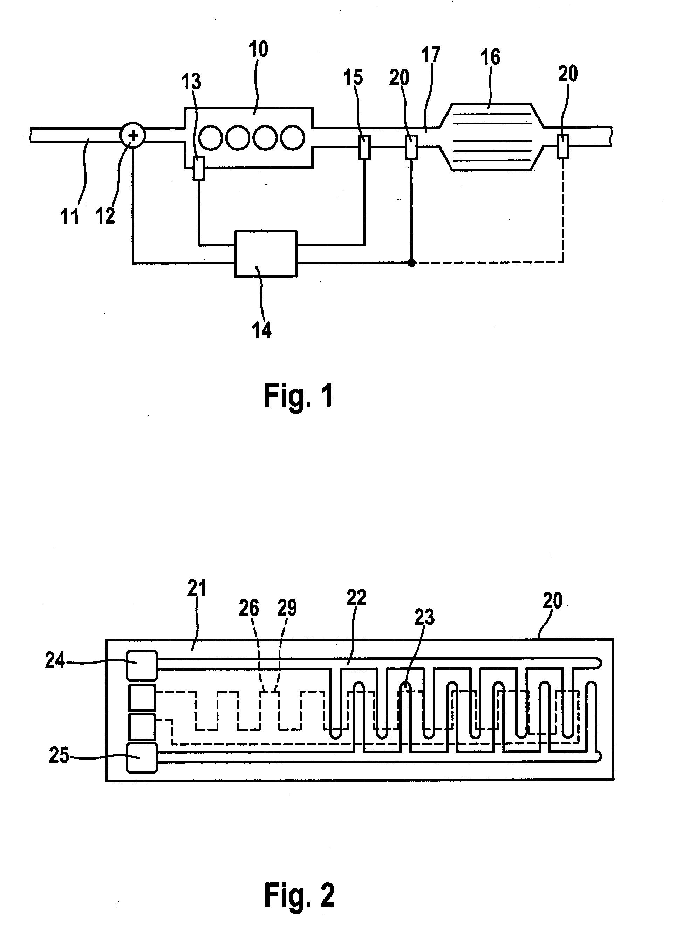

Figur 1 zeigt schematisch als ein Beispiel das technische Umfeld, in dem das erfindungsgemäße Verfahren angewendet werden kann. Das technische Umfeld kann weiterhin auch Abgasnachbehandlungseinrichtungen umfassen, die Maßnahmen zur Minderung mindestens einer weiteren gesetzlich limitierten Komponente enthalten, wie z.B. NOₓ-Minderungsmaßnahmen.

Eine Brennkraftmaschine 10, die als Dieselmotor ausgeführt sein kann, bekommt Verbrennungsluft über eine Luftzuführung 11 zugeführt. Dabei kann die Luftmenge der Verbrennungsluft mittels eines Luftmassenmessers 12 in der Luftzuführung 11 bestimmt werden. Die Luftmenge kann bei einer Korrektur einer Anlagerungswahrscheinlichkeit von im Abgas der Brennkraftmaschine 10 vorhandenen Partikeln verwendet werden. Das Abgas der Brennkraftmaschine 10 wird über einen Abgasstrang 17 abgeführt, in dem eine Abgasreinigungsanlage 16 angeordnet ist. Diese Abgasreinigungsanlage 16 kann als Diesel-Partikelfilter ausgeführt sein. Weiterhin sind im gezeigten Beispiel im Abgasstrang 17 eine als Lambdasonde ausgeführte Abgassonde 15 und eine als Partikelsensor ausgeführte Sensoreinheit 20 angeordnet, deren Signale einer Motorsteuerung 14 zugeführt werden. Die Motorsteuerung 14 ist weiterhin mit dem Luftmassenmesser 12 verbunden und bestimmt auf Basis der ihr zugeführten Daten eine Kraftstoffmenge, die über eine Kraftstoff-Dosierung 13 der Brennkraftmaschine 10 zugeführt werden kann. Die Sensoreinheit 20 kann dabei auch in Strömungsrichtung des Abgases hinter der Abgasreinigungsanlage 16 angeordnet sein. Mit den gezeigten Vorrichtungen ist eine Beobachtung des Partikelausstoßes der Brennkraftmaschine 10 (On-Board-Diagnose) und eine Prognose der Beladung der als Diesel-Partikelfilter (DPF) ausgebildeten Abgasreinigungsanlage 16 möglich.

Figur 2 zeigt in einer schematischen Darstellung eine als Partikel sensor ausgeführte Sensoreinheit 20 entsprechend dem Stand der Technik in der Draufsicht.

Auf einem isolierenden Träger 21, beispielsweise aus Aluminiumoxid, sind eine erste Elektrode 22 und eine zweite Elektrode 23 aufgebracht. Die Elektroden 22, 23 sind in Form zweier interdigitaler, ineinander greifender Kammelektroden ausgeführt. An den stirnseitigen Enden der Elektroden 22, 23 sind ein erster Anschluss 24 und ein zweiter Anschluss 25 vorgesehen, über welche die Elektroden zur Spannungsversorgung und zur Durchführung der Messung mit einer nicht dargestellten Steuereinheit verbunden werden können. Zusätzlich weist die Sensoreinheit 20 einen Temperatursensor 29 auf, mit dem eine Sensortemperatur 31, 32 direkt bestimmt werden kann. Der Temperatursensor 29 kann in Form eines Platinmäanders ausgeführt sein, wobei über zusätzliche Elektroden ein temperaturabhängiger Widerstand bestimmt und innerhalb der Motorsteuerung 14 auswertbar ist.

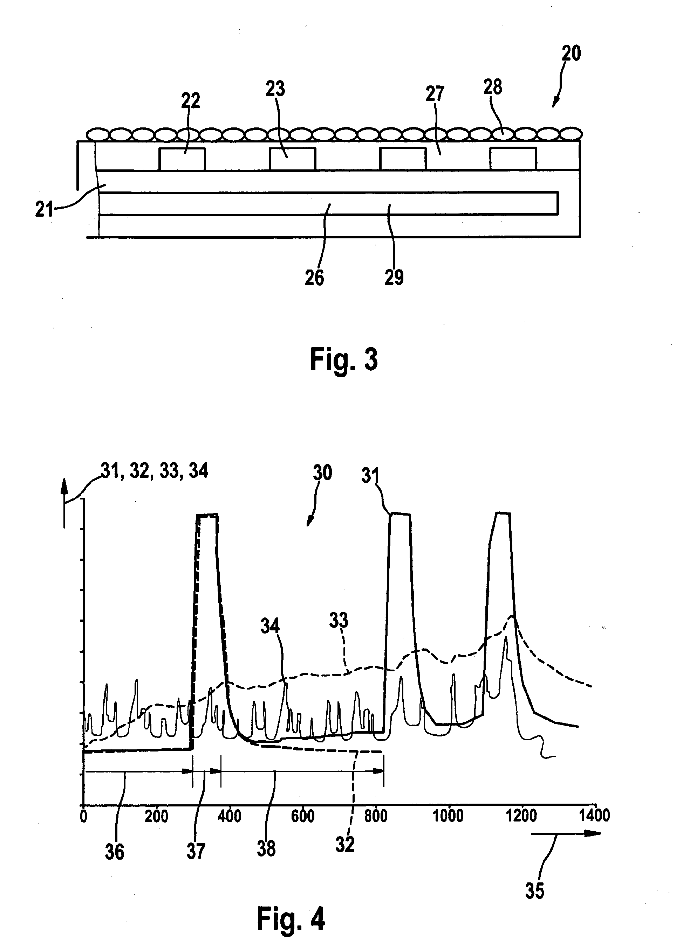

In Figur 3 ist in einer schematischen Darstellung ein Ausschnitt des Partikelsensors 20 in einer Seitenansicht gezeigt.

Zusätzlich zu den bereits in Figur 2 gezeigten Bauelementen ist in der Seitenansicht noch ein Heizelement 26, welches in dem Träger 21 integriert ist, sowie eine optionale Schutzschicht 27 und eine Schicht aus Partikeln 28 dargestellt. Dabei kann vorgesehen sein, dass das Heizelement 26 gleichzeitig als Temperatursensor 29 ausgeführt ist oder dass das Heizelement 26 und der Temperatursensor 29 als separate elektrische Leiter mit separaten Elektroden ausgeführt sind.

Die Funktionsweise derartiger Partikelsensoren ist in der Literatur bereits hinreichend beschrieben und soll daher im Folgenden nur kurz beschrieben werden.

Wird eine solche Sensoreinheit 20 in einem Partikel 28 führenden Gasstrom, beispielsweise in einem Abgaskanal eines Dieselmotors, betrieben, so lagern sich Partikel 28 aus dem Gasstrom an der Sensoreinheit 20 ab. Im Falle des Dieselmotors handelt es sich bei den Partikeln 28 um Rußpartikel mit einer entsprechenden elektrischen Leitfähigkeit. Dabei hängt die Ablagerungsrate der Partikel 28 an der Sensoreinheit 20 neben der Partikelkonzentration in dem Abgas unter anderem auch von der Spannung ab, welche an den Elektroden 22, 23 anliegt. Durch die anliegende Spannung wird ein elektrisches Feld erzeugt, welches auf elektrisch geladene Partikel 28 und auf Partikel 28 mit einer Dipol-Ladung eine entsprechende Anziehung ausübt. Durch geeignete Wahl der an den Elektroden 22, 23 anliegenden Spannung kann daher die Ablagerungsrate der Partikel 28 beeinflusst werden.

In dem Ausführungsbeispiel sind die Elektroden 22, 23 und der Träger 21 elektrodenseitig mit einer Schutzschicht 27 überzogen. Die optionale Schutzschicht 27 schützt die Elektroden 22, 23 bei den zumeist vorherrschenden hohen Betriebstemperaturen der Sensoreinheit 20 vor Korrosion. Sie ist in dem vorliegenden Ausführungsbeispiel aus einem Material mit einer geringen Leitfähigkeit hergestellt, kann jedoch auch aus einem Isolator gefertigt sein.

Auf der Schutzschicht 27 haben sich Partikel 28 aus dem Gasstrom in Form einer Schicht abgelagert. Durch die gering leitfähige Schutzschicht 27 bilden die Partikel 28 einen leitfähigen Pfad zwischen den Elektroden 22, 23, so dass sich, abhängig von der Menge der abgelagerten Partikel 28, eine Widerstandsänderung zwischen den Elektroden 22, 23 ergibt. Diese kann zum Beispiel gemessen werden, in dem eine konstante Spannung an die Anschlüsse 24, 25 der Elektroden 22, 23 angelegt und die Änderung des Stromes durch die angelagerten Partikel 28 bestimmt wird.

Ist die Schutzschicht 27 isolierend aufgebaut, führen die abgelagerten Partikel 28 zu einer Änderung des ohmschen Widerstandes der Sensoreinheit 20, was durch eine entsprechende Messung, bevorzugt mit einer Gleichspannung, ausgewertet werden kann.

Das erfindungsgemäße Diagnoseverfahren sieht vor, dass mit der Sensoreinheit eine Sensortemperatur direkt oder indirekt bestimmt und aus einem Vergleich der direkt oder indirekt bestimmten Sensortemperatur mit einer mittels einer weiteren Sensoreinheit bestimmten Abgastemperatur und/ oder mit Modellgrößen und/ oder mit definierten Schwellwerten eine Erkennung auf Ausbau und/ oder nicht funktionsgerechten Einbau der Sensoreinheit geschlossen wird. Die Funktionalität des erfindungsgemäßen Verfahrens mit den oben beschrieben Varianten kann dabei besonders vorteilhaft als Software in der Motorsteuerung 14 der Brennkraftmaschine 10, bei Diesel-Brennkraftmaschinen in der elektronischen Dieselregelung EDC (Electronic Diesel Control) implementiert sein.

So ist beispielhaft in Figur 4 in einem Verlaufsdiagramm 30 ein Abgasmassenstrom 34 sowie die Temperaturverläufe der Sensortemperatur 31, 32 einer, hinter der als Diesel-Partikelfilter ausgelegten Abgasreinigungsanlage 16 (DPF) angeordneten Sensoreinheit 20 in Abhängigkeit von der Zeit 35 dargestellt, wobei die Sensoreinheit 20 als Partikelsensor ausgebildet ist. Weiterhin ist eine Abgastemperatur 33 dargestellt. Dabei zeigt der zeitliche Verlauf der Sensortemperatur 31 den Temperaturverlauf für einen Partikelsensor, der ordnungsgemäß im Abgasstrang 17 der Brennkraftmaschine 10 eingebaut ist. Der zeitliche Verlauf der Sensortemperatur 32 ergibt sich hingegen, wenn der Partikelsensor ausgebaut bzw. nicht richtig eingebaut ist.

In einer Trocknungs-/Schutzphase 36 erfolgt zunächst mittels einer aktiven Bestromung des Heizelements 26 der Sensoreinheit 20 eine Trocknung der Sensoreinheit 20, bis ein Taupunktende erreicht ist. Daran schließt sich zeitlich eine Regenerationsphase 37 an, innerhalb der angelagerter Ruß abgebrannt wird. In dieser Phase steigt die Sensortemperatur 31, 32 stark an. In dieser Phase kann eine Diagnose unter Berücksichtigung der Heizleistung erfolgen.

Im Anschluss daran ist in einer Phase zur Anlagerung von Rußpartikeln 38 das Heizelement 26 stromlos geschaltet, in der auf Basis der Auswerteverfahren, wie Gradiantenvergleiche bzw. Vergleiche der Verlaufsdynamik der Sensortemperatur 31 einer korrekt eingebauten Sensoreinheit 20 und der Sensortemperatur 32 einer ausgebaut bzw. nicht richtig eingebauten Sensoreinheit 20, die Diagnose erfolgt. So steigt die Sensortemperatur 31 einer korrekt eingebauten Sensoreinheit 20 in dieser Phase zur Anlagerung von Rußpartikeln 38 wieder entsprechend der zunehmenden Abgastemperatur 33 leicht an und wird dabei leicht, entsprechend dem Verlauf des Abgasmassensstroms 34 moduliert, was durch gleichzeitige Auswertung des Abgasmassenstroms 34 unterstütz werden kann. Die Sensortemperatur 32 einer ausgebaut bzw. nicht richtig eingebauten Sensoreinheit 20 fällt hingegen ab und verbleibt auf niedrigem Niveau, bis wieder eine aktive Beheizung erfolgt.

Mit dem vorgestellten Verfahren und der Vorrichtung zur Durchführung dieses Verfahrens können bauliche Veränderungen oder Schäden im Bereich des Abgasbereichs der Brennkraftmaschine detektiert werden. Insbesondere lassen sich damit im Rahmen einer erweiterten On-Board-Diagnose (OBD) Fehlfunktionen oder gar ein missbräuchlicher Ausbau der Sensoreinheit sicher detektieren.

Eine besonders vorteilhafte Anwendung des erfindungsgemäßen Verfahrens und Verwendung der entsprechenden Vorrichtung sieht eine On-Board-Diagnose eines Partikelsensors im Abgasbereich einer Diesel-Brennkraftmaschine vor.

## Patentansprüche

1. Verfahren zur Überwachung einer in einem Abgasbereich einer Brennkraftmaschine (10) angeordneten Sensoreinheit (20), **dadurch gekennzeichnet, dass** mit der Sensoreinheit (20) eine Sensortemperatur (31, 32) direkt oder indirekt bestimmt und aus einem Vergleich der direkt oder indirekt bestimmten Sensortemperatur (31, 32) mit einer mittels einer weiteren Sensoreinheit bestimmten Abgastemperatur (33) und/ oder mit Modellgrößen und/ oder mit definierten Schwellwerten eine Erkennung auf Ausbau und/ oder nicht funktionsgerechten Einbau der Sensoreinheit (20) geschlossen wird.

2. Verfahren nach Anspruch 1, **dadurch gekennzeichnet, dass** die absolute Sensortemperatur (31, 32) der Sensoreinheit (20) mit der Abgastemperatur (33) kontinuierlich verglichen wird.

3. Verfahren nach Anspruch 1 oder 2, **dadurch gekennzeichnet, dass** aus dem absoluten Temperaturverlauf der Sensoreinheit (20) abgeleitete Größen mit entsprechend abgeleiteten Größen der Abgastemperatur (33) kontinuierlich verglichen werden.

4. Verfahren nach Anspruch 3, **dadurch gekennzeichnet, dass** ein Gradient des Temperaturverlaufs der Sensoreinheit (20) mit einem Gradienten des Verlaufs der Abgastemperatur (33) verglichen wird.

5. Verfahren nach einem der Ansprüche 1 bis 4, **dadurch gekennzeichnet, dass** der dynamische Temperaturverlauf der Sensoreinheit (20) bei Beheizung der Sensoreinheit (20) gegenüber einer Modellgröße für die Sensoreinheit (20) bei Beheizung ausgewertet wird.

6. Verfahren nach einem der Ansprüche 1 bis 5, **dadurch gekennzeichnet, dass** eine benötigte Heizleistung zur Einregelung einer Solltemperatur unter Berücksichtigung eines Abgasmassenstroms (34) und der Abgastemperatur (33) ausgewertet wird.

7. Verfahren nach einem der Ansprüche 1 bis 6, **dadurch gekennzeichnet, dass** die Auswertung periodisch in bestimmten Zeitabständen und/ oder bei bestimmten Betriebszuständen der Brennkraftmaschine (10) durchgeführt wird.

8. Vorrichtung zur Überwachung einer in einem Abgasbereich einer Brennkraftmaschine (10) angeordneten Sensoreinheit (20), **dadurch gekennzeichnet, dass** mit der Sensoreinheit (20) eine Sensortemperatur (31, 32) direkt oder indirekt bestimmbar ist, welche in einer Motorsteuerung (14) mit einer mittels einer weiteren Sensoreinheit bestimmten Abgastemperatur (33) und/ oder mit Modellgrößen und/oder mit definierten Schwellwerten vergleichbar ist und aus dem Vergleich ein Fehlereintrag und/ oder eine Warnmeldung ableitbar ist.

9. Vorrichtung nach Anspruch 8, **dadurch gekennzeichnet, dass** die Sensoreinheit (20) einen Temperatursensor (29) in Form eines Platinmäanders aufweist.

10. Vorrichtung nach einem der Ansprüche 8 oder 9, **dadurch gekennzeichnet, dass** die Sensoreinheit (20) ein Heizelement (26) aufweist.

11. Vorrichtung nach einem der Ansprüche 8 bis 10, **dadurch gekennzeichnet, dass** die Sensoreinheit (20) ein Partikelsensor ist.

12. Anwendung des Verfahrens nach einem der Ansprüche 1 bis 7 sowie Verwendung der Vorrichtung nach Anspruch 8 bis 11 im Rahmen einer On-Board-Diagnose bei einer als Dieselmotor ausgebildeten Brennkraftmaschine (10).

## Claims

1. Method for monitoring a sensor unit (20) which is arranged in an exhaust region of an internal combustion engine (10), **characterized in that** with the sensor unit (20) a sensor temperature (31, 32) is determined directly or indirectly, and detection of removal and/or functionally incorrect installation of the sensor unit (20) is inferred from a comparison of the directly or indirectly determined sensor temperature (31, 32) with an exhaust gas temperature (33) determined by means of a further sensor unit and/or with model variables and/or with defined threshold values.

2. Method according to Claim 1, **characterized in that** the absolute sensor temperature (31, 32) of the sensor unit (20) is compared continuously with the exhaust gas temperature (33).

3. Method according to Claim 1 or 2, **characterized in that** variables derived from the absolute temperature profile of the sensor unit (20) are continuously compared with correspondingly derived variables of the exhaust gas temperature (33).

4. Method according to Claim 3, **characterized in that** a gradient of the temperature profile of the sensor unit (20) is compared with a gradient of the profile of the exhaust gas temperature (33).

5. Method according to one of Claims 1 to 4, **characterized in that** the dynamic temperature profile of the sensor unit (20) is evaluated during heating of the sensor unit (20) with respect to a model variable for the sensor unit (20) during heating.

6. Method according to one of Claims 1 to 5, **characterized in that** a required heating power for adjusting a setpoint temperature is evaluated taking into account an exhaust gas mass flow (34) and the exhaust gas temperature (33).

7. Method according to one of Claims 1 to 6, **characterized in that** the evaluation is carried out periodically at specific time intervals and/or in specific operating states of the internal combustion engine (10).

8. Device for monitoring a sensor unit (20) which is arranged in an exhaust region of an internal combustion engine (10), **characterized in that** with the sensor unit (20) a sensor temperature (31, 32) can be determined directly or indirectly, which sensor temperature (31, 32) can be compared, in an engine controller (14), with an exhaust gas temperature (33) determined by means of a further sensor unit and/or with model variables and/or with defined threshold values, and a fault entry and/or a warning message can be derived from the comparison.

9. Device according to Claim 8, **characterized in that** the sensor unit (20) has a temperature sensor (29) in the form of a serpentine platinum element.

10. Device according to one of Claims 8 or 9, **characterized in that** the sensor unit (20) has a heating element (26).

11. Device according to one of Claims 8 to 10, **characterized in that** the sensor unit (20) is a particle sensor.

12. Application of the method according to one of Claims 1 to 7 and use of the device according to Claims 8 to 11 within the scope of onboard diagnosis in an internal combustion engine (10) which is embodied as a diesel engine.

## Revendications

1. Procédé de surveillance d'une unité de détection (20) disposée dans une zone des gaz d'échappement d'un moteur à combustion interne (10), **caractérisé en ce qu'**une température de détecteur (31, 32) est déterminée directement ou indirectement avec l'unité de détection (20) et une détection du démontage et/ou du montage non apte au fonctionnement de l'unité de détection (20) est déduite à partir d'une comparaison de la température de détecteur (31, 32) déterminée directement ou indirectement avec une température des gaz d'échappement (33) déterminée au moyen d'une autre unité de détection et/ou avec des grandeurs modèles et/ou avec des valeurs de seuil définies.

2. Procédé selon la revendication 1, **caractérisé en ce que** la température de détecteur (31, 32) absolue de l'unité de détection (20) est continuellement comparée avec la température des gaz d'échappement (33).

3. Procédé selon la revendication 1 ou 2, **caractérisé en ce que** les grandeurs dérivées de la courbe de température absolue de l'unité de détection (20) sont comparées continuellement avec des grandeurs dérivées correspondantes de la température des gaz d'échappement (33).

4. Procédé selon la revendication 3, **caractérisé en ce qu'**un gradient de la courbe de température de l'unité de détection (20) est comparé avec un gradient de la courbe de la température des gaz d'échappement (33).

5. Procédé selon l'une des revendications 1 à 4, **caractérisé en ce que** la courbe de température dynamique de l'unité de détection (20) lors du chauffage de l'unité de détection (20) est interprétée par rapport à une grandeur modèle pour l'unité de détection (20) lors du chauffage.

6. Procédé selon l'une des revendications 1 à 5, **caractérisé en ce qu'**une puissance de chauffage nécessaire pour l'asservissement à une température de consigne est interprétée en tenant compte d'un débit massique des gaz d'échappement (34) et de la température des gaz d'échappement (33).

7. Procédé selon l'une des revendications 1 à 6, **caractérisé en ce que** l'interprétation est effectuée périodiquement à des intervalles donnés et/ou lors d'états opérationnels donnés du moteur à combustion interne (10).

8. Dispositif de surveillance d'une unité de détection (20) disposée dans une zone des gaz d'échappement d'un moteur à combustion interne (10), **caractérisé en ce qu'**une température de détecteur (31, 32) peut être déterminée directement ou indirectement avec l'unité de détection (20), laquelle peut être comparée dans une commande de moteur (14) avec une température des gaz d'échappement (33) déterminée au moyen d'une autre unité de détection et/ou avec des grandeurs modèles et/ou avec des valeurs de seuil définies et la présence d'une erreur et/ou un message d'alerte peuvent être dérivés de la comparaison.

9. Dispositif selon la revendication 8, **caractérisé en ce que** l'unité de détection (20) présente un capteur de température (29) sous la forme d'un méandre en platine.

10. Dispositif selon l'une des revendications 8 ou 9, **caractérisé en ce que** l'unité de détection (20) présente un élément chauffant (26).

11. Dispositif selon l'une des revendications 8 à 10, **caractérisé en ce que** l'unité de détection (20) est un détecteur de particules.

12. Application du procédé selon l'une des revendications 1 à 7 et aussi utilisation du dispositif selon l'une des revendications 8 à 11 dans le cadre d'un diagnostic embarqué avec un moteur à combustion interne (10) réalisé sous la forme d'un moteur diesel.
